# EUROPÄISCHE PATENTANMELDUNG

(11) **EP 1 128 075 A2**
(43) Veröffentlichungstag der Anmeldung: **29.08.2001**
(21) Anmeldenummer: 00111659.9
(22) Anmeldetag: 31.05.2000
(51) Int. Cl.: F15C 5/00, F04B 43/04, B01J 19/00

(54) **Mikropumpe und/oder Mikromischer mit integriertem Sensor und Verfahren zu dessen Herstellung**

(30) Priorität: 24.02.2000 EP 00103855
(71) Anmelder: FRAUNHOFER-GESELLSCHAFT ZUR FÖRDERUNG DER ANGEWANDTEN FORSCHUNG E.V., 80636 München (DE)
(72) Erfinder: Endres, Hanns-Erik, Dr., 80689 München (DE); Richter, Martin, Dr., 81677 München (DE)

(57) **Zusammenfassung**

Vorgeschlagen wird eine Mikromembranpumpe und/oder ein Mikromischer, mit einer Antriebsmembran (10), mindestens einem Einlass und mindestens einem Auslass (3), und einem Pumpen-/Mischerkörper (9), welcher zusammen mit der Antriebsmembran (10) mindestens eine Pump-/Mischerkammer (300) bildet dadurch gekennzeichnet, dass in die Mikropumpe/ den Mikromischer mindestens ein Messfühler (400) integriert ist. Als Messfühler wird bevorzugt eine Elektrodenanordnung gewählt, welche die Anwendung elektrochemischer Messverfahren ermöglicht. Dies kann z. B. eine parallele Platten Anordnung sein. Weiterhin wird die Anwendung von Auswerteverfahren der multivariaten Statistik oder der Mustererkennung vorgeschlagen.

## Beschreibung

Die vorliegende Erfindung betrifft eine Mikropumpe und/oder einen Mikromischer mit kombiniertem Messfühler für die Voltametrie, Amperometrie, Konduktometrie und/oder Impedanzspektroskopie und Verfahren zu deren Herstellung sowie deren Verwendung zur Messung nach speziellen Verfahren.
Diese elektrochemischen Messverfahren liefern Daten über verschiedenste Stoffparameter. Z.B. liefern (Cyclo)-Voltametrie und Amperometrie über Oxidations- und Redoxpotentiale Aussagen über die verschiedenen elektroaktiven Stoffe in der Lösung. Amperometrie kann Aussagen über die Mischungen verschiedener Stoffe liefern, Impedanzspektrometrie über die dielektrischen Eigenschaften von Flüssigkeiten (z.B. in der Lebensmitteltechnologie).

Bei der Untersuchung von Krankheitsbildern oder Routine-Gesundheitskontrollen stützt sich die moderne Medizin zunehmend auf die quantitative Bestimmung relevanter Substanzen in Körperflüssigkeiten. Dabei eignet sich die vorliegende Erfindung insbesondere für die nichtinvasive Diagnostik mit elektrochemischer Harnanalyse, z.B. zur Detektion von Medikamentenrückständen.

### Stand der Technik

In der Elektrochemie sind (cyclo)-voltametrische, amperometrische und impedanzspektroskopische Messverfahren seit langem Stand der Technik. Zur Anwendung dieser Verfahren werden planare Elektrodenanordnungen, meist in der Form von Interdigitalstrukturen, und Plattenkondensatoranordnungen als Messsonden verwendet. Z. B wird der (Wechselstrom)-Widerstand dabei in Abhängigkeit von der Wechselstromfrequenz (bei Gleichspannung ist diese gleich null) und der Spannung gemessen. Elektrodenanordnungen haben gegenüber von Plattenkondensatoranordnungen den Nachteil, dass sie wegen der auftretenden Streufelder und der inhomogenen Feld- und/oder Stromverteilung einen geringen Wirkungsgrad haben, d.h. es befindet sich nur ein geringer Anteil des Probenvolumens innerhalb von Bereichen hoher Feldstärke, welche für das Erzeugen eines aussagekräftigen Signals zu bevorzugen sind. In Plattenkondensatoren wird zwar ein homogenes Feld und damit homogene Stromdichten erzeugt, um hohe Feldstärken zu erreichen (und damit einen hohen Wirkungsgrad) muss der Plattenabstand jedoch möglichst gering sein. Dem zu Folge wird der Flüssigkeitsaustausch durch Kapillarkräfte und einen hohen Strömungswiderstand behindert, was einen Einsatz im Durchfluss verhindert.
Ein weiterer Nachteil der Messanordnungen zur elektrochemischen Analyse nach dem Stand der Technik liegt in der Notwendigkeit der Behandlung der Elektrodenoberflächen für den erfolgreichen Einsatz der Meßmethode, welche bislang nur durch hochqualifiziertes Fachpersonal möglich ist.
Eine Mikropumpe welche eine Antriebsmembran, einen Pumpenkörper der mit der Pumpmembran verbunden ist um eine Pumpkammer zu bilden und einen Aus- sowie einen Einlass aufweist ist beispielsweise in DE 19719862 beschrieben.

### Gelöste Aufgabe

Der Erfindung liegt die Aufgabe zugrunde, eine Einrichtung, Verfahren zu deren Herstellung und Messverfahren zum Betreiben der Einrichtung anzugeben welche die sich aus dem Stand der Technik ergebenden Nachteile von Elektrodenanordnungen bei elektrochemischen Messverfahren vermeidet, und günstig zu produzieren sowie einfach einzusetzen ist.

### Beschreibung

Gemäß der vorliegenden Erfindung wird die Aufgabe durch die Merkmale des Anspruches 1 gelöst. Die vorliegende Erfindung stellt darüber hinaus in den Ansprüchen 9 bis 17 auch Verfahren zum Betreiben der Anordnung sowie zu deren Herstellung zur Verfügung.

Die bevorzugten Ausführungsformen sind Gegenstand der abhängigen Ansprüche.

Das erfindungsgemäße Konzept besteht aus der Integration eines Messfühlers in eine Mikropumpenanordnung, z.B. eine Mikromembranpumpe und/oder einen aktiven Mikromischer. Im Folgenden wird ohne Einschränkung der Allgemeinheit von einer Mikropumpe gesprochen. Eine Mikropumpe besteht aus einer Antriebsmembran, und einem Pumpenkörper, welche zusammen mindestens eine Pumpkammer bilden, wobei mindestens ein Ein- und ein Auslass, für das Pumpmedium, zur Pumpkammer vorgesehen ist. Das Pumpmedium kann aus Flüssigkeiten und/oder Gasen bestehen. In der weiteren Beschreibung wird wiederum ohne Einschränkung der Allgemeinheit von Flüssigkeiten gesprochen.
Die Ein- und Auslässe können, neben der Möglichkeit der Ausführungsform als einfache Löcher in der Pumpkammer, auch z.B. als passive Rückschlagventile oder als Diffusor-Nozzle-Anordnung ausgeführt sein. Bei einer Diffusor-Nozzle-Anordnung handelt es sich um trichter- oder düsenförmige Ein- und Auslässe. Der Innendurchmesser des Einlasses ist dabei in Pumpenrichtung verbreitert, während der Innendurchmesser des Auslasses in Pumpenrichtung verjüngt ist. Fehlen Rückschlagventile in den Ein- und Auslässen kann die Dispersion der Phasen, d.h. die Vermischung von verschiedenen Pumpmediumskomponenten, reduziert werden. Die Ein- und/oder Auslässe können auch lateral, d.h. seitlich an der Pumpkammer, angeordnet sein.

Bei dem Messfühler, im Folgenden auch als Sensorelement bezeichnet, handelt es sich bevorzugt um auf der Innenwand der Pumpkammer und/oder den zu- oder abführenden Fluidikelementen, d.h. alle das Pumpmedium leitenden Komponenten eines Aufbaues mit einer Mikropumpe und die Ein- und Auslässe, der Anordnung aufgebrachte Elektrodenstrukturen. Es sind jedoch auch andere Sensoren möglich, die auch in oder an der/den Antriebsmembran/en angebracht sein können. Insbesondere Sensoren zur Messung thermodynamischer Größen, also z.B. Druck- und/oder Temperatursensoren sind zusätzlich zu den Elektroden oder auch alleine sinnvoll. Als Elektrodenanordnung können vielfältige Konfigurationen verwendet werden. In Anwendung können z.B. einzeln adressierbare und/oder parallel geschaltete Elektroden kommen, welche flächenhaft oder mikrostrukturiert sein können. Die Elektroden können z.B. innerhalb der Pumpkammer/n und/oder in den zuführenden Fluidikelementen angeordnet sein. Bei einer Multielektrodenanordnung bei der die Elektroden wiederum einzeln ansteuerbar oder parallel geschaltet sein können, sind ortsaufgelöste Messungen der Pumpmediumseigenschaften möglich. Die Elektroden können mit einer funktionalen Schicht, z.B. einem Isolator, oder einem funktionalem Schichtsystem, z. B. bioaktiven Schichten, oder z.B. mit einer Kombination daraus versehen sein. Dabei können die verschiedenen Elektroden auch unterschiedliche Beschichtungen aufweisen. Weiter sind eine oder mehrere flüssigkeitsgepufferte Elektroden möglich. Bei flüssigkeitsgepufferten Elektroden ist eine Membran über den Elektroden angeordnet. Zwischen dieser Membran und der Elektrode befindet sich eine Flüssigkeit. Das Sensorsignal hängt dann von der Durchlässigkeit der Membran für die Ladungsträger in der zu untersuchenden Substanz, d.h. dem Pumpmedium, ab. Für die Auswahl des Elektrodenmaterials bestehen ebenfalls viele Möglichkeiten, wobei die Elektroden beispielsweise in Dünnfilmtechnik, Dickschichttechnik oder elektrochemisch auf ein leitendes Trägersubstrat, z.B. ein Metall, einen leitenden Kunststoff oder einen Halbleiter, aufgebracht werden. Metalle werden z.B. in Dünnschichttechnologie als Elektroden aufgebracht. Dagegen werden organische Verbindungen als Elektroden in Dickschichttechnologie aufgebracht.

Auch für die weiteren Komponenten der Mikropumpe, also z.B. den Pumpenkörper, die Antriebsmembran/en oder optional vorhandene Ventile können verschiedene Materialien eingesetzt werden. Bevorzugt werden die Bauteile aus Materialien gefertigt, welche die mechanischen Anforderungen für Mikropumpenbauteile hinsichtlich Stabilität und Elastizität erfüllen sowie bevorzugt mit den Methoden der Halbleitertechnologie und/oder mit Laserverfahren strukturierbar sind, wie z.B. Silizium als Beispiel für einen Halbleiter, Glas oder Polymere und Kombinationen daraus.
Die Einzelteile der erfindungsgemäßen Anordnung werden miteinander verklebt, z.B. mittels Epoxidharz, oder in anderer geeigneter Weise, z.B. durch anodisches Bonden, miteinander verbunden. Dabei können Abstandshalter zwischen den Einzelteilen , z.B. in Bumptechnologie oder als Folie, realisiert werden und im Falle des Verklebens Kanäle als Reservoir und/oder Fließstopp vorgesehen werden.

Für die Funktion als Sensor müssen zusätzlich zu den Ansteuerungselektroden einer Mikropumpe und/oder eines Mikromischers nach dem Stand der Technik, weitere elektrische Anschlüsse für den Messsensor angebracht werden.
Die Antriebselektroden, welche zur Ansteuerung der Antriebsmembran notwendig sind, werden durch geeignete Maßnahmen, z. B. Aufbringen von Isolationsschichten und/oder galvanische Trennung, so angeordnet, dass das Sensorsignal nicht signifikant gestört wird. Die Antriebsmembran kann durch alle Prinzipien welche in der Lage sind, die Membran periodisch auszulenken, angetrieben werden. Diese Prinzipien sind z.B.:
- Piezoelektrischer Antrieb
- Elektrostatischer Antrieb
- Thermopneumatischer Antrieb
- Magnetischer Antrieb, Bubble-Antrieb
- elektrochemischer Antrieb

Zusätzlich oder stellvertretend zum Flüssigkeitstransport durch die Bewegung von Antriebsmembranen können auch externe Antriebe, z.B. durch externe Druckbeaufschlagung auf das Pumpmedium angewendet werden und/oder weitere Funktionselemente, wie z.B. zusätzliche Ventile, in die Anordnung integriert werden um einen definierten Pumpmediumstransport an das/die Sensorelement/e zu erreichen.

Bei einer Ausführungsform der vorliegenden Erfindung mit mindestens zwei Einlässen kann ein Aufbau für die Fließ-Injektions-Analyse (FIA) realisiert werden. Die FIA dient zur Messung von Eigenschaften sich durchmischen der Medien. Es wird mindestens ein Medium in ein anderes Medium injiziert. Dabei werden an dem Medium, in welches das andere Medium injiziert wird, mit einem ersten Sensor (Referenzsensor) Eigenschaften gemessen und mit einem zweiten Sensor (aktiver Sensor) entsprechende Messungen nach der Injektion, während der Durchmischung der Medien, durchgeführt. Bei einer Anordnung mit mehr als zwei Einlässen können entsprechend mehr Medien vermischt, zur Reaktion gebracht und die Reaktionsprodukte am Mischungsort detektiert werden. Die Anzahl der Einlässe entspricht dabei der Anzahl der mischbaren Medien. Bei einer lateralen Anordnung von mehreren Meßelektroden , d.h. einer in Pumprichtung nebeneinander liegenden Anordnung der Sensorelemente, kann die Reaktionskinetik der erst teilweise gemischten Phasen orts- und zeitaufgelöst untersucht werden.

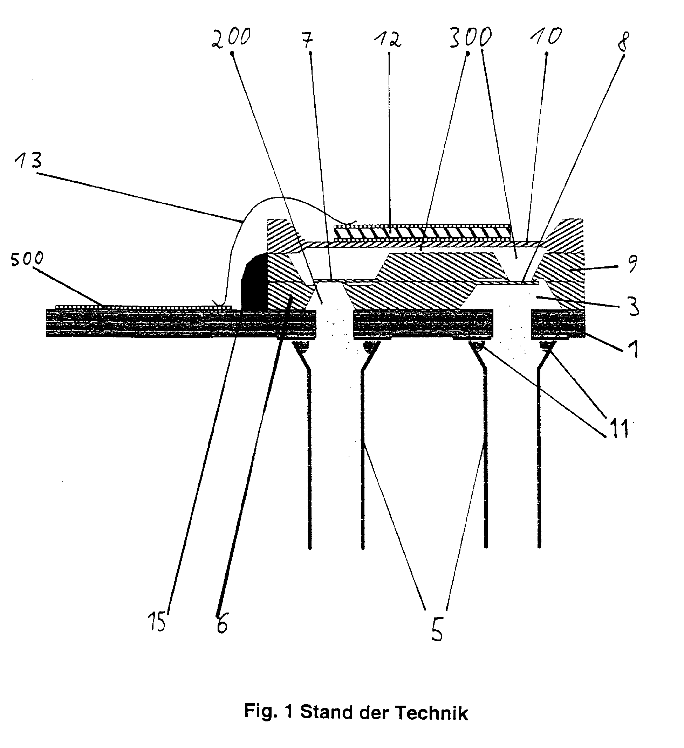

Die periodische Bewegung der Membran kann eine dreifache Funktion haben:
- Volumetrische Verdrängung der Flüssigkeit oder des Gases (Pumpmedium) für die Funktion als Mikropumpe
- Mischung der unterschiedlichen zugeführten Pumpmedien (Phasen)
- transiente Analyse des Sensorsignals in Abhängigkeit vom Elektrodenabstand und vom Pumpmediumsaustausch.
Zur Funktion als Mikropumpe ist die Kurvenform der Membranbewegung zweitrangig, es kann eine Pumpwirkung sowohl mit einer rechteckförmigen, sinusförmigen als auch mit einer beliebigen anderen periodischen Membranauslenkung erreicht werden. Diese Membranbewegung kann durch die Form der Ansteuerspannung des Aktors der Membran erreicht werden. Für die Funktion als Mikropumpe befindet sich der optimale Frequenzbereich der Membranbewegung im Beispiel der Fig. 1 im Bereich bis 200 Hertz, wobei jedoch auch noch bei Frequenzen bis über zehn Kilohertz eine Pumpwirkung zu beobachten ist. Für den Betrieb als Mikropumpe ist auch der Einsatz von variablen Frequenzen möglich. Auch Wobble-Betrieb oder ein sich anders änderndes zeitabhängiges Signal führt zu einer Pumpwirkung. Ebenso spielt die Kurvenform für die Funktion als Mikromischer eine untergeordnete Rolle. Deshalb lässt sich die Kurvenform der Membranbewegung für die Sensorfunktion der erfindungsgemäßen Anordnung optimieren. Die Bewegung der Membran kann durch Ändern der an das Antriebselement angelegten Antriebsspannung gesteuert werden, wobei in erster Näherung die Auslenkung der Membran und das verdrängte Volumen proportional zur an die Elektroden des Antriebselements angelegten Spannung ist. Z.B. kann bei einer Anordnung der Elektrode, bei der sich eine Elektrode auf der Antriebsmembranoberfläche innerhalb der Pumpkammer, gegenüber einer zweiten Elektrode, befindet, die Dauer eines geringen Abstandes der Elektroden so gewählt werden, dass sich während dieser Zeitdauer voltametrische, kontuktometrische, cyclovoltametrische, amperometrische oder impedanzspektrometrische Messungen durchführen lassen. Während der Zeit eines geringen Elektrodenabstandes lassen sich hohe Feldstärken zwischen den Elektroden bei geringen Spannungen erreichen, was einen guten Wirkungsgrad hinsichtlich der Messung bewirkt.

Für Messverfahren, die längere Zeit in Anspruch nehmen, z.B. spektroskopische Verfahren bei denen die Frequenz der die Messelektroden beaufschlagenden Spannung über einen Frequenzbereich variiert wird, kann die Pumpe abgeschaltet werden. Dies kann auch bei Messverfahren welche, z.B. durch die Antriebsspannung oder die Bewegung des Pumpaktors, gestört werden geschehen.
Die erfindungsgemäße Anordnung lässt sich auch ähnlich einer Kelvinsonde einsetzen. Eine Kelvinsonde besteht aus einem Plattenkondensator dessen Plattenabstand periodisch variierbar ist. Sie wird zur Bestimmung von Austrittsarbeiten eingesetzt.

Die erfindungsgemäße Anordnung vermeidet die prinzipiellen Nachteile der planaren Elektrodenanordnung und die der Plattenkondensatoranordnung bei elektrochemischen Messverfahren. Durch den aktiven Antrieb wird ein rascher Flüssigkeitsaustausch zwischen den Elektroden ermöglicht. Die Bewegung der Antriebsmembran ermöglicht in der Phase großer Annäherung der Messelektroden ein hohes, das zu untersuchende Pumpmedium durchdringendes, Feld und damit einen hohen Wirkungsgrad bezüglich der Messung. Wogegen in der Phase eines großen Abstandes zwischen den Messelektroden ein hoher Pumpmediumsdurchsatz ermöglicht wird. Der aktive Antrieb erlaubt zudem das Studium transienter Vorgänge, was für die Signalverarbeitung erhebliche Vorteile hat. So kann zum Beispiel in Abhängigkeit vom Elektrodenabstand und/oder von der Pumpmediumsgeschwindigkeit, d.h. zum Beispiel vom Flüssigkeitsaustausch, gemessen werden. Weiter kann der Elektrodenabstand statisch oder dynamisch eingestellt werden. Damit können z.B. Volumeneffekte und Grenzflächeneffekte unterschieden werden und selektiv Randschichtphänomene gemessen werden. Die gewonnenen Messwerte können mit Verfahren der multivariaten Statistik und Mustererkennung, z.B. der Hauptkomponentenanalyse, neuronalen Netzen oder linearen und/oder nichtlinearen Schätzmethoden ausgewertet werden. Bei der, dem Fachmann aus anderen Gebieten bekannten Hauptkomponentenanalyse enthält die Messung und Auswertung, z.B. bei der Cyclovoltametrie bevorzugt folgende Schritte:
- In einem Referenzmesslauf werden Cyclovoltagramme für verschiedene bekannte Konzentrationen von Stoffen und/oder verschiedene Stoffe in einer Flüssigkeit aufgenommen. Es werden also j Datenreihen aufgenommen.
- Jedes dieser Cyclovoltagramme besteht aus einem Satz von i Messwerten xᵢ in Abhängigkeit von i Spannungswerten Uᵢ. Diese Messwerte bilden einen Vektor X.
- Die Messvektoren werden zu einer Matrix [X]ᵢⱼ zusammengefasst.
- Aus dieser Matrix wird eine quadratische Matrix [M]ᵢᵢ gebildet indem die Matrix [X]ᵢⱼ mit ihrer Transponierten multipliziert wird.
- Es werden Eigenwerte der Matrix [M]ᵢᵢ berechnet.
- Die Eigenvektoren E_{1,2} zu den zwei größten Eigenwerten werden bestimmt. Diese Eigenvektoren haben jeweils i Komponenten.
- Die einzelnen Vektoren X der Messdatenreihen werden mit den Eigenvektoren scalar multipliziert. Als Ergebnis hat man j Wertepaare die sich als Punkte in ein zweidimensionales Koordinatensystem eintragen lassen. Jeder dieser Punkte ist genau einer der verschiedenen Konzentrationen von Stoffen und/oder verschiedenen Stoffe zugeordnet.
- Werden nun Cyclovoltagramme von der Flüssigkeit mit unbekannten Beimengungen aufgenommen, so können diese wiederum als Vektoren mit i Komponenten interpretiert werden. Diese Vektoren werden jeweils mit den beiden Eigenvektoren der Referenzdatenmessung E_{1,2} scalar multipliziert. Was wieder zu einem als Punkt interpretierbaren Datenpaar führt. Hat man in der gemessenen Flüssigkeit eine den Referenzproben entsprechende Stoffbeimengung, dann liegen der Punkt der Messung und der Punkt der Referenzmessung im Sinne einer Abstandsnorm, welche nicht zwingend der geometrische Abstand zwischen den Punkten ist, nah beieinander. Die Messprobe kann so identifiziert werden.

Vor dem erstellen der Messvektoren können die Datenreihen auch noch einer mathematischen Transformation, wie z.B. einer Fouriertransformation unterzogen werden. Dies ermöglicht die Reduktion der Datenmenge durch die Auswahl eines Wertebereiches, welcher für die nachfolgende Analyse die Messinformationen enthält. Die beschriebenen Matrixberechnungen werden dann mit den transformierten Daten durchgeführt.
Alle elektrochemischen Meßmethoden, z.B. Voltametrie, Amperometrie und/oder Impedanzmessung, können stationär und/oder nichtstationär, z.B. als Cyclovoltametrie oder Impedanzspektroskopie ausgeführt werden. Ebenso können alle Messverfahren mit transientem Medienwechsel, d.h. mit sich mit der Zeit ändernden Pumpmedien wie z.B. bei der FIA, durchgeführt werden.

Weitere Vorteile der erfindungsgemäßen Anordnung liegen in der geringen Größe, dem einfachen und rubusten Aufbau, der kostengünstigen Herstellung mit mikrosystemtechnischen Methoden und der einfachen Anpassung des Grundbauelements an verschiedene Anforderungen. Bedingt durch die Anordnung der empfindlichen Elektrodenoberflächen innerhalb der Pumpkammer wird der Sensor vor Verschmutzung und/oder anderen qualitätsmindernden Einflüssen geschützt.
Bei einer kostengünstigen Massenherstellung kann der Wartungsaufwand durch den einfachen Austausch eines wesentlichen Funktionselements entscheidend verringert werden, der Einsatz von elektrochemischen Meßmethoden außerhalb von Fachlabors wird dadurch erst möglich.

Die vorliegende Erfindung wird ohne Beschränkung des allgemeinen Erfindungsgedankens im Folgenden anhand von Ausführungsbeispielen unter Bezugnahme auf die Zeichnungen detailliert beschrieben.

Fig. 1 zeigt eine Mikropumpe mit piezoelektrischem Antrieb der Membran nach dem Stand der Technik im Querschnitt.
Fig. 2 zeigt eine erste Ausführungsform der erfindungsgemäßen Mikropumpe mit zwei Sensorelektroden im Querschnitt und die flächenhafte Anordnung der Pumpenelemente.
Fig. 3 zeigt eine weitere Ausführungsform der vorliegenden Erfindung mit Pump- und Mischerfunktion im Querschnitt und die flächenhafte Anordnung der Pumpenelemente.
Fig.4 zeigt eine weitere Ausführungsform der vorliegenden Erfindung mit Pump- und Mischerfunktion und einer planaren Elektrodenanordnung in Interdigitalform im Querschnitt und die flächenhafte Anordnung der Pumpenelemente.
Fig. 5 zeigt eine weitere Ausführungsform der vorliegenden Erfindung mit Pump- und Mischerfunktion, welche eine Referenzelektrode zur Einstellung des Flüssigkeitspotentials aufweist im Querschnitt und die flächenhafte Anordnung der Pumpenelemente.

In Fig. 1 wird eine Mikropumpe nach dem Stand der Technik dargestellt. Die Mikropumpe ist auf einem Trägersubstrat (1), z.B. aus Keramik, befestigt, welches jeweils ein Loch für den Einlass (200) und den Auslass (3) der Mikropumpe aufweist. Der Einlass sowie der Auslass für das Pumpmedium sind jeweils mitt einem Röhrchen (5), z.B. aus Metall, versehen. Die Abdichtung erfolgt durch das Verbinden der Röhrchen mit der Pumpe mittels einer Vergussmasse (11), z.B. Lötzinn. Die Ventileinheit (6) in die das Einlassventil (7) und das Auslassventil (8) integriert sind, bildet zusammen mit dem Pumpkörper (9) und der Antriebsmembran (10) die Pumpkammer (300). Die Antriebsmembran bildet zusammen mit dem Pumpenkörper eine Verengung der Pumpkammer mit einer Pumpkammerhöhe im Bereich von 15 Mikrometern. Als Antriebselement (12) der Antriebsmembran (10) ist eine Piezokeramik vorgesehen, welche mittels eines Bonddrahtes (13) mit den auf dem Trägersubstrat aufgebrachten elektrischen Anschlüssen, z.B. Metallisierungsschichten (500), verbunden ist. Die Einzelteile der Pumpe sind mit einem Klebstoff (15), in diesem Fall einem Kontaktklebstoff auf dem Trägersubstrat befestigt. Die Pumpwirkung wird durch periodisches auf und ab Bewegen der Membran erzielt. Die Hauptbewegung erfolgt dabei nach unten, was zu einer Kontraktion des Kammervolumens führt. Durch Kontraktion des Piezoelements wird ein Aufwölben der Membran und dadurch eine Pumpkammervolumenvergrößerung erreicht.

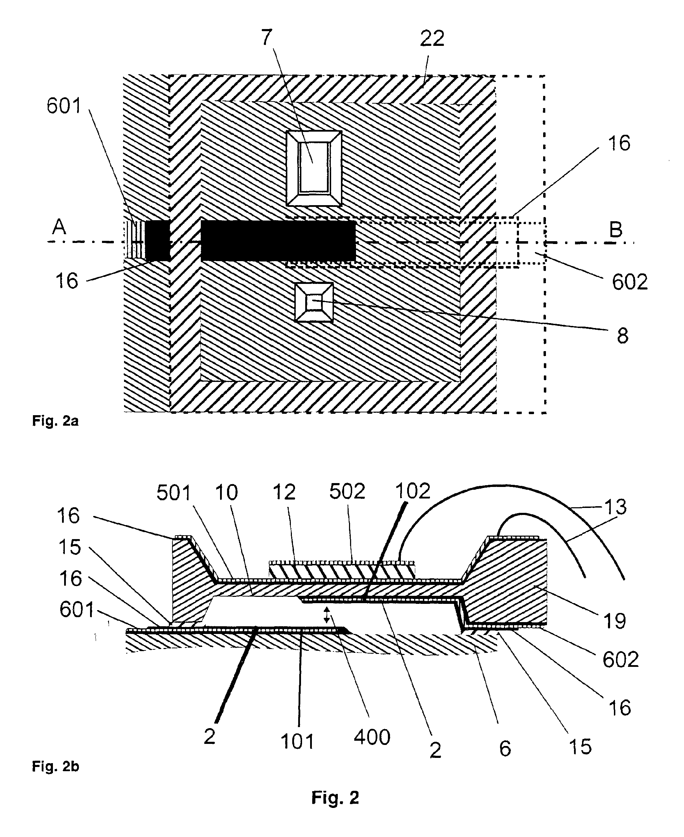

In Fig. 2 wird eine Ausführungsform der vorliegenden Erfindung mit zwei Sensorelektroden dargestellt. Fig. 2a ist eine flächenhafte Darstellung. Fig. 2b ist ein Querschnitt entlang der Linie A-B durch Fig. 2a. Fig. 2a zeigt die Anordnung der Sensorelektroden zwischen dem Einlassventil (7) und dem Auslassventil (8). Eine erste Sensorelektrode (101) ist auf die Ventileinheit (6), welche z.B. aus Silizium besteht, aufgebracht. Die Antriebsmembran (10) ist zusammen mit dem Pumpkörper als eine Membraneinheit (19) aus einem Substrat, z.B. aus Silizium, hergestellt. Eine zweite Sensorelektrode (102) ist auf der Oberfläche der Antriebsmembran, gegenüber der ersten Sensorelektrode (101), innerhalb der Pumpkammer aufgebracht. Beide Sensorelektroden bilden ein Sensorelement (400) (durch einen Doppelpfeil dargestellt), sie sind durch isolierende Schichten (16) gegen die angrenzenden Mikropumpenteile galvanisch getrennt und verfügen weiterhin über eine Oberflächenbeschichtung (2). (In allen Zeichnungen sind Oberflächenbeschichtungen und/oder isolierende Schichten durch starke durchgezogene Linien dargestellt.) Bei Vorhandensein einer isolierenden Oberflächenbeschichtung eignet sich die Ausführungsform insbesondere zur Impedanzspektroskopie, bei Fehlen dieser Beschichtung zur Konduktometrie. Durch Verbinden der Ventileinheit mit dem Membran- und Pumpkörpersubstrat, z.B. mittels eines Klebstoffes (15) wird die Pumpkammer gebildet. Die Sensorelektroden werden so dimensioniert, dass die selben jeweils zu deren Kontaktierung aus dem Pumpkörper hinaus reichen. Die Kontaktierungsfläche der ersten Sensorelektrode (601) und die Kontaktierungsfläche der zweiten Sensorelektrode (602) sind in der Figur dargestellt. Weiterhin erkennt man in Fig. 2a die Fügeflächen (22) an denen die Ventileinheit mit dem Pumpkörper verklebt ist. Auf der Außenseite der Antriebsmembran ist eine von der Antriebsmembran isolierte Metallisierungsschicht (501) aufgebracht, welche als erste Elektrode für die Ansteuerung des Antriebselementes (12), z.B. eine Piezokeramik, vorgesehen ist. Eine weitere Metallisierungsschicht (502) auf dem Antriebselement ist als zweite Ansteuerungselektrode desselben vorgesehen. Diese Metallisierungsschicht ist über einer isolierenden Schicht (16) aufgebracht, welche die galvanische Trennung des Antriebselementes von der Membraneinheit bewirkt. Durch auf und ab Bewegen der Antriebsmembran wird der Abstand zwischen den Sensorelektroden variiert. Während Zeiten geringen Abstandes können hohe Feldstärken zwischen den Elektroden erreicht werden. Innerhalb dieser Zeiten können elektrochemische Messungen besonders gut durchgeführt werden, wogegen die Zeiten großen Abstandes einen hohen Pumpmediumsdurchsatz ermöglichen. Die Sensorelektroden und die Antriebselektroden können jeweils mittels Bonddrähten (13) elektrisch verschaltet werden.
Zur Kontaktierung der Sensorelektroden ergeben sich unterschiedliche Möglichkeiten. Sensorelektrode zwei (102) kann analog zu Fig. 1 mit leitfähigen Schichten z.B. auf einer Trägerkeramik leitend verbunden werden. Ebenfalls möglich ist es, die Sensorelektrode zwei (102) vertikal mit Anschlüssen auf der Ventileinheit (6) leitend zu verbinden. Eine weitere Alternative ist es, die Sensorelektrode vertikal an die Oberseite der Antriebseinheit (19) zu führen. Vorteile dieser Varianten ist, dass die Bonddrähte (13) von nur einer Seite angebracht werden müssen.

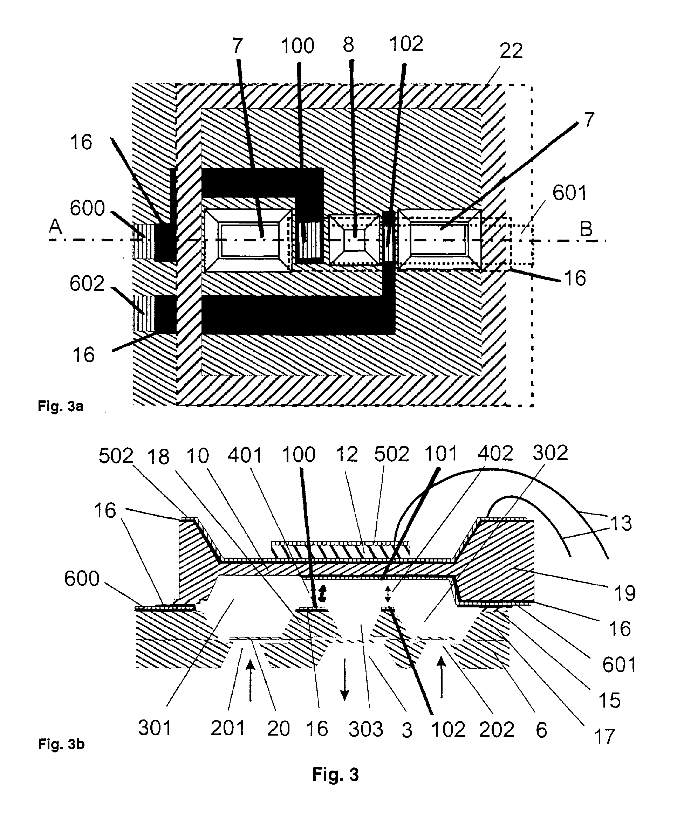

In Fig. 3 wird eine Ausführungsform der vorliegenden Erfindung mit zwei Einlässen (201, 202) und einem Auslass (3) dargestellt. Aus dem Vorhandensein von zwei Einlässen ergibt sich die Möglichkeit der Vermischung zweier Pumpmedien. Fig. 3a ist eine flächenhafte Darstellung. Fig. 3b ist ein Querschnitt entlang der Linie A-B durch Fig. 3a. Fig. 3a zeigt die Anordnung der Sensorelektroden zwischen den Ventilen der Einlässe (7) und dem Auslassventil (8) sowie deren Topologie auf der Ventileinheit (6). Es sind isolierende Schichten (16) über den Bereichen der Elektroden, welche weder zur Kontaktierung, noch zur Messung Verwendung finden, aufgebracht. Die Pumprichtung ist mit Hilfe von Pfeilen eingezeichnet. Die Einlässe und der Auslass sind jeweils mit einem passiven Rückschlagventil (20) versehen. Die Ventile sind in, in das Substrat des Pumpkörpers geätzten Gruben angeordnet. Durch das Versehen der Pumpenkörpereinheit (17) mit den Gruben für die Ventile, wobei in den Bereichen zwischen den Gruben die Dicke des Substrates aus welchem die Pumpkörpereinheit gefertigt ist erhalten bleibt, ist die Pumpkammer, welche durch das Zusammenfügen von Pumpenkörpereinheit (17) und Membraneinheit (19) gebildet wird, in drei Bereiche aufgeteilt. Es handelt sich um einen linken (301) und einen rechten (302) Pumpkammerbereich und einen Mischerbereich (303) über dem Auslass (3). Im Mischerbereich, zu welchem zusätzlich das erhöhte Volumen bei Auswölbung der Antriebsmembran nach Oben zu Rechnen ist, können unterschiedliche Pumpmedien vermischt werden. Auf den Bereichen zwischen den Gruben für die Ventile ist jeweils eine Sensorelektrode (100, 102) aufgebracht. Eine weitere Sensorelektrode (101) ist als Gegenelektrode auf der pumpkammerseitigen Oberfläche der Antriebsmembran aufgebracht. Durch diese Anordnung lassen sich zwei Sensorelemente, Sensorelement eins (401) (durch einen Doppelpfeil dargestellt) in der linken Pumpkammer (301) und Sensorelement zwei (402) (durch einen Doppelpfeil dargestellt) in der rechten Pumpkammer (302), verwirklichen. Zur Messung wird mindestens eines der beiden Sensorelemente kontaktiert. Durch Integration weiterer Elektroden im Auslass (3) können zusätzliche Messungen an den vermischten Medien durchgeführt werden. Die Kontaktierungsfläche (600, 602) der beiden ersten, auf den Bereichen zwischen den Gruben für die Ventile aufgebrachten Sensorelektroden (100, 102) und die Kontaktierungsfläche (601) der weiteren Sensorelektrode (101) sind in der Figur dargestellt. Weiterhin erkennt man in Fig. 3a die Fügeflächen (22) an denen die Ventileinheit mit dem Pumpkörper verklebt ist. Bei Vorhandensein einer isolierenden Oberflächenbeschichtung auf den Sensorelektroden eignet sich die Ausführungsform insbesondere zur Impedanzspektroskopie, bei fehlen dieser Beschichtung zur Konduktometrie. Auf der Außenoberfläche der Antriebsmembran (10) ist ein Antriebselement (12) vorgesehen. Diese Anordnung eignet sich insbesondere zur Fließ-Injektions-Analyse (FIA).

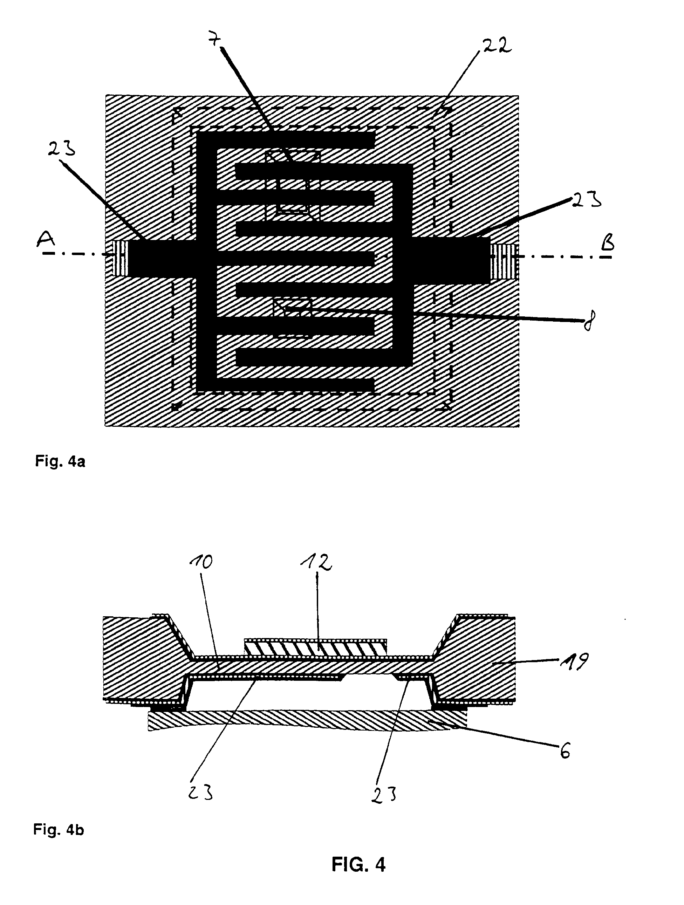

In Fig. 4 wird eine Ausführungsform der vorliegenden Erfindung mit integrierten Interdigitalelektroden (23) dargestellt. Fig. 4a ist eine flächenhafte Darstellung. Fig. 4b ist ein Querschnitt entlang der Linie A-B durch Fig. 4a. Fig. 4a zeigt die Anordnung der Sensorelektroden und deren Topologie auf der Antriebsmembran (10) und die Lage des Einlassventils (7) und des Auslassventils (8) in der Ventileinheit (6). Weiterhin erkennt man in Fig. 4a die Fügeflächen (22) an denen die Ventileinheit mit dem Pumpkörper verklebt ist. Auch diese Anordnung eignet sich bei Vorhandensein einer isolierenden Oberflächenbeschichtung auf den Sensorelektroden insbesondere zur Impedanzspektroskopie, bei fehlen dieser Beschichtung zur Konduktometrie.

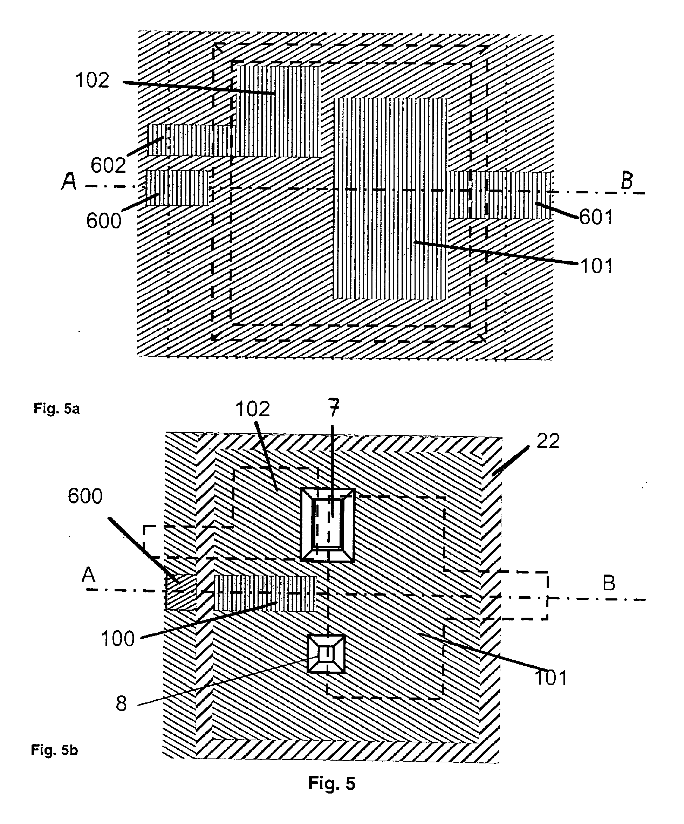

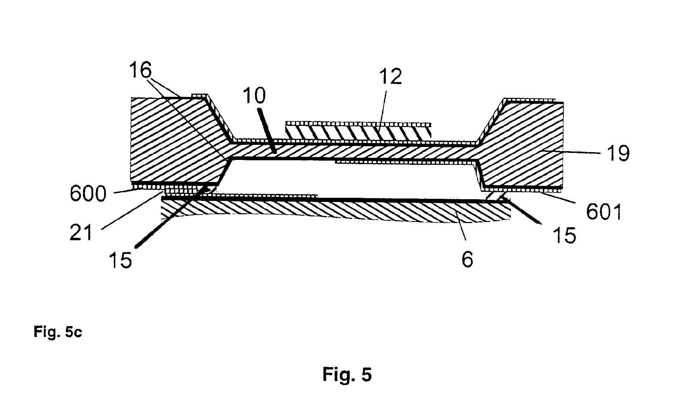

In Fig. 5 wird eine Ausführungsform der vorliegenden Erfindung mit zwei Sensorelektroden (101, 102) in planarer Elektrodenanordnung dargestellt. Zusätzlich ist auf der Ventileinheit (6) eine weitere Sensorelektrode (100), welche als Referenzelektrode genutzt werden kann, aufgebracht. Mit deren Hilfe kann das Pumpmedium, respektive die zu pumpende Flüssigkeit auf ein elektrisches Potential gegenüber den Sensorelektroden (101, 102) gebracht werden. Die Referenzelektrode ist mit einer elektrisch leitfähigen Durchkontaktierung (21) mit einer Kontaktierungsfläche (600) verbunden. Fig. 5a ist eine flächenhafte Darstellung der Membraneinheit mit der Topologie der aufgebrachten Elektroden (101, 102) auf der Membran (10) und den zugehörigen Kontaktflächen (601, 602). Weiterhin ist die Kontaktfläche (600) für die Referenzelektrode aufgebracht. Fig. 5c ist ein Querschnitt entlang der Linie A-B durch Fig. 5a und 5b. Fig. 5b zeigt die Anordnung der Referenzelektrode auf der Ventileinheit (6) und die Lage des Einlassventils (7) und des Auslassventils (8). Die Lage der sich auf der Membraneinheit befindenden Elektroden ist ebenfalls eingezeichnet. Der Chip aus dem die Membraneinheit (19) besteht ist Ventileinheitsseitig ganzflächig mit einer Isolationsschicht (16) versehen. Weiterhin erkennt man in Fig. 2a die Fügeflächen (22) an denen die Ventileinheit mit dem Pumpkörper verklebt ist. Diese Anordnung eignet sich insbesondere zur Voltametrie.

### Hierzu 6 Seiten Zeichnungen

### Bezugszeichenliste

- 1: Trägersubstrat
- 2: Oberflächenbeschichtung
- 3: Auslass
- 4: Referenzelektrode
- 5: Röhrchen
- 6: Ventileinheit
- 7: Einlassventil
- 8: Auslassventil
- 9: Pumpkörper und/oder Mischerkörper
- 10: Antriebsmembran
- 11: Vergussmasse
- 12: Antriebselement
- 13: Bonddraht
- 15: Klebstoff
- 16: isolierende Schichten
- 17: Pumpenkörpereinheit
- 19: Membraneinheit
- 20: Rückschlagventil
- 21: Durchkontaktierung
- 22: Fügebereiche
- 23: Interdigitalelektrode
- 100, 101, 102: Sensorelektrode
- 200, 201, 202: Einlass
- 300, 301, 302, 303: Pumpkammer und/oder Mischerkammer
- 400, 401, 402: Sensorelement
- 500, 501, 502: Metallisierungsschicht
- 600, 601, 602, 603: Kontaktierungsflächen der Elektroden

## Patentansprüche

1. Mikromembranpumpe und/oder Mikromischer, mit
- einer Antriebsmembran (10),
- mindestens einem Einlass und mindestens einem Auslass (3), und
- einem Pumpen-/Mischerkörper (9), welcher zusammen mit der Antriebsmembran (10) mindestens eine Pump-/Mischerkammer (300) bildet
**dadurch gekennzeichnet, dass** in die Mikropumpe/ den Mikromischer mindestens ein Messfühler (400) integriert ist.

2. Anordnung nach Anspruch 1 **dadurch gekennzeichnet,** dass der/die Messfühler (400) innerhalb oder an den Innenwänden der Pump-/Mischerkammer (300) und/oder in und/oder auf der/den Antriebsmembran/en (10) angeordnet ist/sind und/oder, dass die/der Messfühler (400) Eigenschaften des Pumpmediums misst.

3. Anordnung nach Anspruch 1 und/oder 2 **dadurch gekennzeichnet,** dass die Messfühler (400) aus Sensorelektroden (100) bestehen, welche einzeln kontaktierbar oder parallel geschaltet werden können und/oder sich mindestens teilweise gegenüber liegen, wobei mindestens eine der Sensorelektroden auf der Oberfläche der Antriebsmembran (10), innerhalb der Pump-/Mischerkammer (300) angebracht ist.

4. Anordnung nach Anspruch 3 **dadurch gekennzeichnet**, dass die sich teilweise gegenüberliegenden Sensorelektroden zumindest gebietsweise eine parallele Platten Anordnung bilden.

5. Anordnung nach Anspruch 3 und/oder 4 **dadurch gekennzeichnet,** dass die Sensorelektrode/n mit einer oder mehreren Oberflächenschichten (2) und/oder Schichtsystemen beschichtet sind und/oder dass es sich bei den Sensorelektroden um strukturierte Elektroden handelt.

6. Anordnung nach Anspruch 5 **dadurch gekennzeichnet**, dass es sich bei den strukturierten Elektroden um Interdigitalelektroden handelt.

7. Anordnung nach mindestens einem der Ansprüche 1 bis 6 **dadurch gekennzeichnet**, dass sich mindestens ein Einlass oder mindestens ein Auslass lateral am Pump-/Mischerkörper befindet und/oder Sensorelemente in Pumprichtung benachbart liegend angeordnet sind.

8. Anordnung nach mindestens einem der Ansprüche 1 bis 7 **dadurch gekennzeichnet**, dass an zu den Einlässen zuführenden und/oder von den Auslässen abführenden Fluidikbauelementen und/oder in die Mikropumpe/ den Mikromischer weitere Messfühler und/oder Funktionselemente (4) integriert sind.

9. Verfahren zur Herstellung der Anordnung nach mindestens einem der Ansprüche 1 bis 8 **gekennzeichnet durc**h die folgenden Verfahrensschritte
- Herstellung der Ventileinheit, der Pumpkörpereinheit und der Membraneinheit inclusive Metallisierungsschichten, Elektroden und Oberflächenschichten, wobei diese Einheiten auch teilweise zusammen aus einem Substrat hergestellt sein können,
- Verbinden der fertig prozessierten Einheiten.

10. Verfahren nach Anspruch 9 **dadurch gekennzeichnet,** dass die Elektroden in Dünnfilmtechnik oder Dickschichttechnik oder elektrochemisch auf den Substraten abgeschieden werden.

11. Verfahren nach Anspruch 9 und/oder 10 **dadurch gekennzeichnet,** dass das Verbinden durch anodisches Bonden oder durch Verkleben vorgenommen wird und/oder Abstandshalter zwischen den Einheiten und/oder Kanäle auf den zu verbindenden Oberflächen vorgesehen sind.

12. Verfahren nach Anspruch 11 **dadurch gekennzeichnet,** dass es sich bei den Abstandshaltern um Bumps oder Folien handelt.

13. Verwendung der Anordnung nach mindestens einem der Ansprüche 2 bis 8 zur Erfassung von Messdaten **dadurch gekennzeichnet,** dass die Messung mit den Verfahren der Voltametrie, Amperometrie und/oder Impedanzmessung durchgeführt werden oder dass die Anordnung als Kelvinsonde eingesetzt wird.

14. Erfassung von Messdaten nach Anspruch 13 **dadurch gekennzeichnet,** dass die Messungen während der Kontraktionsphase der Pumpe durchgeführt werden.

15. Erfassung von Messdaten nach Anspruch 13 und/oder Anspruch 14 **dadurch gekennzeichnet,** dass die Messung nichtstationär und/oder mit transientem Medienwechsel durchgeführt wird.

16. Verfahren nach mindestens einem der Ansprüche 13 bis 15 **dadurch gekennzeichnet,** dass ein Auswerteverfahren für Messdaten aus der multivariaten Statistik und/oder der Mustererkennung durchgeführt wird.

17. Verfahren nach Anspruch 16 **dadurch gekennzeichnet,** dass es sich bei dem Auswerteverfahren um die Hauptkomponentenanalyse oder ein Verfahren unter Anwendung von neuronalen Netzen handelt.
